# EUROPÄISCHE PATENTANMELDUNG

(11) **EP 3 664 397 A1**
(43) Veröffentlichungstag der Anmeldung: **10.06.2020**
(21) Anmeldenummer: 18210770.6
(22) Anmeldetag: 06.12.2018
(51) Int. Cl.: H04L 29/06, H04L 29/08, H04L 9/08

(54) **VERFAHREN ZUR DATENKOMMUNIKATION, KOMMUNIKATIONSGERÄT, COMPUTERPROGRAMM UND COMPUTERLESBARES MEDIUM**

(71) Anmelder: Siemens Aktiengesellschaft, 80333 München (DE)
(72) Erfinder: Aschauer, Hans, 81829 München (DE); Falk, Rainer, 85586 Poing (DE); Fries, Steffen, 85598 Baldham (DE); Heintel, Markus, 81377 München (DE); Klasen, Wolfgang, 85521 Ottobrunn (DE); Pfau, Axel, 80333 München (DE); Sperl, Franz, 92526 Oberviechtach (DE); Trummer, Georg, 92224 Amberg (DE); Zwanzger, Johannes, 85579 Neubiberg (DE)

(57) **Zusammenfassung**

Die Erfindung betrifft ein Verfahren zur Datenkommunikation in einem insbesondere industriellen Netzwerk, bei dem zwischen wenigstens zwei Kommunikationspartnern (1, 2) Nutzdaten in geschützter Form zu übertragen sind und/oder übertragen werden, wobei für den Schutz Schlüssel (K-K'''') mit begrenzter Gültigkeit zum Einsatz kommen, und wobei zwischen den wenigstens zwei Kommunikationspartnern (1, 2) zusätzlich zu den geschützten Nutzdaten Schlüsselinformationen, die für eine Erneuerung und/oder Verwaltung von Schlüsseln (K-K'"') erforderlich sind, übertragen werden, wobei überwacht wird, ob sich der Daten- insbesondere Nutzdatenverkehr in einem kritischen oder unkritischen Zustand befindet, und für den Fall, dass ein unkritischer Zustand vorliegt, unabhängig davon, ob Bedarf an wenigstens einem neuen Schlüssel (K-K'''') besteht oder nicht, gezielt eine Übertragung von Schlüsselinformationen zwischen den wenigstens zwei Kommunikationspartnern (1, 2) erfolgt und/oder wenigstens ein neuer Schlüssel (K-K'''') für die wenigstens zwei Kommunikationspartner (1, 2) beschafft und/oder wenigstens ein Schlüsselwechsel durchgeführt wird. Darüber hinaus betrifft die Erfindung ein Kommunikationsgerät, ein Computerprogramm und ein computerlesbares Medium.

## Beschreibung

Die Erfindung betrifft ein Verfahren zur Datenkommunikation in einem insbesondere industriellen Netzwerk, bei dem zwischen wenigstens zwei Kommunikationspartnern Nutzdaten in geschützter, insbesondere verschlüsselter Form zu übertragen sind und/oder übertragen werden, wobei für den Schutz der Nutzdaten Schlüssel mit begrenzter Gültigkeit zum Einsatz kommen, und wobei zwischen den wenigstens zwei Kommunikationspartnern zusätzlich zu den geschützten Nutzdaten Schlüsselinformationen, die für eine Erneuerung und/oder Verwaltung von Schlüsseln erforderlich sind, übertragen werden. Darüber hinaus betrifft die Erfindung ein Kommunikationsgerät, ein Computerprogramm und ein computerlesbares Medium.

Die Sicherheit kryptografischer Verfahren hängt unter anderem von der Frische des verwendeten Schlüsselmaterials ab, was im englischen auch als "Cryptografic Freshness" bezeichnet wird. Dies trifft insbesondere für Schlüssel zu, die zum Schutz - etwa hinsichtlich Integrität, Authentizität oder auch Vertraulichkeit - von Massendaten dienen, beispielsweise bei der Verschlüsselung eines Datenstroms, der zwischen zwei Systemen oder Standorten ausgetauscht wird. Beispielhaft sei hier auf das als Transport Layer Security (abgekürzt TLS, ins Deutsche übersetzt: Transportschichtsicherheit) bezeichnete Verschlüsselungsprotokoll oder auch die als IPsec bezeichnete IP-Erweiterung, die der Payload-Verschlüsselung dient.

Bei vielen vorbekannten, gängigen Verfahren, beispielsweise AES-GCM (AES steht für Advanced Encryption Standard und GCM für Glois Counter Mode) ist es zwingend erforderlich, den Schlüssel regelmäßig zu wechseln, da der Schlüssel nach einer vorgegebenen Anzahl von Verwendungen erschöpft ist. Bei AES-GCM ist dies der Fall, nachdem der Vorrat möglicher Initialisierungs-Vektoren für den jeweiligen Schlüsselwert verbraucht wurde. Eine weitere Verwendung des Schlüssels würde dazu führen, dass beispielsweise die Vertraulichkeit verschlüsselter Daten nicht mehr garantiert werden kann. Unter Umständen ist es auch möglich, bereits zu einem früheren Zeitpunkt mit einem solchen Schlüssel geschützte Daten zu kompromittieren, oder den verwendeten kryptografischen Schlüssel zu ermitteln.

Um das Schlüsselmaterial jeweils rechtzeitig zu erneuern, müssen zwischen den beteiligten Kommunikationspartnern in einem Netzwerk neben den eigentlichen Nutzdaten, die mit dem Schlüssel zu schützen sind, zusätzliche Informationen ausgetauscht werden, die insbesondere der Abwicklung eines Protokolls zur Schlüsselerneuerung dienen und vorliegend auch als Schlüsselinformationen bezeichnet werden.

Der Austausch von Schlüsselinformationen stellt zusätzlichen Datenverkehr im Netzwerk dar, welcher sich nachteilig auf den Austausch der Nutzdaten auswirken kann. Für die Übertragung der zur Schlüsselerneuerung notwendigen Schlüsselinformationen wird Bandbreite benötigt, die nicht mehr für die eigentliche Nutzdatenübertragung zur Verfügung steht. Außerdem entstehen zusätzlich Latenz und Jitter. Ist ein kryptografischer Schlüssel erschöpft, können schlimmstenfalls überhaupt keine Nutzdaten mehr ausgetauscht werden, bis das Schlüsselmaterial erfolgreich erneuert wurde.

Aus dem Stand der Technik bekannt ist es beispielsweise, ein festes Schlüssel-Scheduling bzw. Schlüssel-Update durchzuführen.

So definiert die von der International Electrotechnical Commission publizierte Norm IEC 62351-3 beispielsweise den Schlüsselaustausch nach einer definierten Anzahl von Paketen, die mit dem aktuellen etablierten kryptografischen Schlüssel geschützt wurden, oder aber nach einer bestimmten Zeit, zum Beispiel für TLS (Transport Layer Security).

BACNet (ANSI/ASHRAE 135-2008 Addendum g) ist ein weiteres Verfahren, das einen Schlüssel-Schedule definiert. Hierbei muss eine Komponente immer den aktuellen und den zukünftigen Satz an Schlüsseln halten. Die Verteilung wird über einen Schlüsselserver realisiert, der auf Anfrage neue Schlüsselsätze verteilt.

Weiterhin bekannt sind Verfahren, bei denen der aktuell benutzte kryptografische Schlüssel erst nach einer gewissen Zeit oder Anzahl von gesendeten Paketen freigegeben wird. Als Beispiel sei TESLA (Timed Efficient Stream Loss-tolerant Authentication) genannt, das in IETF RFC 4082 (Request for Comments der Internet Engineering Task force, siehe https://www.ietf.org/rfc/rfc4082.txt) definiert ist, und eine verzögerte Schlüsselfreigabe auf Haschkettenbasis realisiert.

Auch bekannt sind Verfahren, bei denen der Schlüssel über eine Verbindung ausgehandelt aber über eine zweite Verbindung genutzt wird ("Out of Band"). Ein Beispiel dafür ist das in IETF RFC 3261 definierte Session Initiation Protocol (abgekürzt SIP) in Zusammenhang mit Media Stream Security Descriptions (siehe IETF RFC 4568 der IETF).

Darüber hinaus sind Verfahren bekannt, bei denen vor der Ausführung eines kritischen Befehls eine Authentisierung gefordert wird. Hier sei auf DNP3-Secure Authentication gemäß der Norm IEC 623451-1 verweisen. Der dafür benötigte Schlüssel wird über ein "Out of Band" Schlüssel Management aktualisiert.

Eine weitere der Anmelderin bekannte Möglichkeit, dem Problem der Beeinflussung der Nutzdatenübertragung zu begegnen, besteht darin, die insgesamt zur Verfügung stehende Bandbreite in einem Netzwerk in einen Teil für die Nutzdaten und das benötigte Datenvolumen für kryptografische Protokolle zur Schlüsselverwaltung aufzuteilen. Um eine feste Bandbreite für Nutzdaten zu garantieren, muss für das Datenvolumen zur Schlüsselverwaltung vom ungünstigsten Fall ausgegangen werden, beispielsweise davon, dass viele kleine Payload-Pakete und/oder eine starke Fragmentierung der verschlüsselten Datenblöcke vorliegen, und eine häufige Schlüsselerneuerung erforderlich ist. Da das Worst-Case-Szenario nicht immer erfüllt ist, kann dadurch unnötig Bandbreite für die Nutzdaten verloren gehen.

Eine der Anmelderin bekannte Lösung, um die Bandbreite - beispielsweise beim Video-Streaming - vollständig auszunutzen, besteht darin, einen hinreichend großen Empfangspuffer für die Nutzdaten vorzusehen. Während die Nutzdaten-Übertragung durch eine Schlüsselerneuerung beeinträchtigt wird, können dann Nutzdaten aus dem Empfangspuffer entnommen werden, um ein Abreißen des Films zu verhindern. Dies führt jedoch zu einer höheren Latenz, falls Der Datenpuffer immer (vorausschauend) verwendet wird. Ein höherer Jitter tritt auf, falls der Puffer nur im Bedarfsfall verwendet wird.

Aus der DE 10 2009 036 234 A1 ist bekannt, dass eine Datenübertragung in einem Industrienetzwerk abhängig von einem aktuellen Fertigungsschritt erfolgt. Dabei wird vorgeschlagen, dass die Übertragung von Daten im Rahmen von sicherheitsrelevanten Verwaltungsaufgaben, wie beispielsweise ein Rekeying, gesperrt bzw. verzögert wird, wenn der aktuelle Fertigungsschritt eine echtzeitkritische oder verarbeitungstechnisch kritische Phase darstellt. Dies, da insbesondere bei einer drahtlosen Datenübertragung einzelne Fertigungsschritte, wie etwa ein Schweißvorgang, ein Schaltvorgang mit hohen Strömen oder auch ein Bewegen eines metallischen Teils in die Übertragungsstrecke, die Datenübertragung stören oder sogar verhindern kann. Umfasst der aktuelle Fertigungsschritt einen solchen Vorgang, kann die Datenübertragung gesperrt werden, bis ein Fertigungsschritt begonnen wird, der die Datenübertragung nicht stört.

Insbesondere im Umfeld industrieller Anwendungen, beispielsweise im Umfeld industrieller Automatisierungssysteme, sind die Echtzeit- bzw. QoS-Anforderungen (QoS steht für Quality of Service) für die Nutzdatenübertragung im Netzwerk nicht statisch, sondern variieren abhängig von der gerade verrichteten Aufgabe. Rein beispielhaft sei ein hohes Datenvolumen und Echtzeitanforderungen während der Bearbeitung eines Werkstückes und eine niedrigere Anforderung während des Wartens auf das nächste Werkstück genannt. Daher ist es wünschenswert, insbesondere für industrielle Anwendungsfälle eine möglichst effiziente Variante eines Schlüssel-Managements zu realisieren.

Die Aufgabe der vorliegenden Erfindung besteht daher darin, ein Verfahren der eingangs genannten Art derart weiterzuentwickeln, dass ein besonders effizientes Schlüsselmanagement, eine besonders effiziente Nutzung zur Verfügung stehender Bandbreite bei gleichzeitig hohem Maß an Sicherheit gewährleistet. Darüber hinaus ist es Aufgabe der vorliegenden Erfindung, ein Kommunikationsgerät zur Durchführung eines solchen Verfahrens bereitzustellen.

Bei einem Verfahren der eingangs genannten Art wird diese Aufgabe dadurch gelöst, dass überwacht wird, ob sich der Daten- insbesondere Nutzdatenverkehr in einem kritischen oder unkritischen Zustand befindet, und für den Fall, dass ein unkritischer Zustand vorliegt, unabhängig davon, ob Bedarf an wenigstens einem neuen Schlüssel besteht oder nicht, gezielt eine Übertragung von Schlüsselinformationen zwischen den wenigstens zwei Kommunikationspartnern erfolgt und/oder wenigstens ein neuer Schlüssel für die wenigstens zwei Kommunikationspartner beschafft wird und/oder wenigstens ein Schlüsselwechsel durchgeführt wird.

Unabhängig davon, ob ein Bedarf an neuen Schlüsseln besteht oder nicht, bedeutet insbesondere, dass (auch) für den Fall, dass kein Bedarf an wenigstens einem neuen Schlüssel besteht, gezielt eine Übertragung von Schlüsselinformationen zwischen den wenigstens zwei Kommunikationspartnern erfolgt und/oder wenigstens ein neuer Schlüssel für die wenigstens zwei Kommunikationspartner beschafft wird und/oder wenigstens ein Schlüsselwechsel durchgeführt wird. Insbesondere gilt, dass auch für den Fall, dass noch wenigstens ein gültiger Schlüssel existiert, bzw. ein aktuell verwendeter Schlüssel noch gültig, insbesondere noch nicht abgelaufen bzw. ein Schlüsselvorrat noch nicht erschöpft ist, eine Übertragung von Schlüsselinformationen zwischen den wenigstens zwei Kommunikationspartnern erfolgt und/oder wenigstens ein neuer Schlüssel für die wenigstens zwei Kommunikationspartner beschafft wird und/oder wenigstens ein Schlüsselwechsel durchgeführt wird.

Besonders bevorzugt ist vorgesehen, dass in Zeiten, in denen ein unkritischer Zustand der Datenübertragung vorliegt, unabhängig davon, ob ein Bedarf an neuen Schlüsseln besteht oder nicht, kontinuierlich oder sich insbesondere in vorgegebenen zeitlichen Abständen wiederholend eine Übertragung von Schlüsselinformationen zwischen den wenigstens zwei Kommunikationspartnern erfolgt und/oder kontinuierlich oder sich insbesondere in vorgegebenen zeitlichen Abständen wiederholend wenigstens ein neuer Schlüssel für die wenigstens zwei Kommunikationspartner beschafft wird und/oder kontinuierlich oder sich insbesondere in vorgegebenen zeitlichen Abständen wiederholend wenigstens ein Schlüsselwechsel durchgeführt wird.

Dabei gilt bevorzugt, dass die vorgegebenen zeitlichen Abstände kürzer sind, mit anderen Worten der Update-Zyklus kürzer ist als eine Schlüssel-Gültigkeitsdauer, insbesondere eine garantierte und/oder prognostizierte Schlüssel-Mindestgültigkeits- bzw. Schlüssel-Mindestnutzdauer. Besonders bevorzugt liegen die vorgegebenen zeitlichen Abstände bzw. liegt der Update-Zyklus um wenigstens eine Größenordnung oder wenigstens zwei Größenordnungen unterhalb der Schlüssel-Gültigkeitsdauer, insbesondere garantierten und/oder prognostizierten Schlüssel-Mindestgültigkeits- bzw. Schlüssel-Mindestnutzdauer. Die Schlüssel-Gültigkeitsdauer kann beispielsweise in der Größenordnung von Stunden oder Tagen liegen. Der Update-Zyklus liegt dann bevorzugt im Bereich einiger Sekunden oder Minuten.

In weiterer bevorzugter Ausgestaltung ist entsprechend vorgesehen, dass sich in vorgegebenen zeitlichen Abständen von einer oder einigen oder einigen zehn Sekunden oder einer oder einigen oder einigen zehn Minuten wiederholend bzw. mit einem Update-Zyklus von einer oder einigen oder einigen zehn Sekunden oder einer oder einigen oder einigen zehn Minuten eine Übertragung von Schlüsselinformationen zwischen den wenigstens zwei Kommunikationspartnern erfolgt und/oder wenigstens ein neuer Schlüssel für die wenigstens zwei Kommunikationspartner beschafft wird und/oder wenigstens ein Schlüsselwechsel durchgeführt wird.

Darunter liegende Schlüssel-Update-Zyklen bzw. häufigere Updates können unter Umständen weniger geeignet sein, da Schlüssel-Update-Protokolle insbesondere durch die erforderlichen Netzwerk-Roundtrips und kryptographischen Berechnungen selbst in der Regel eine minimale Durchlaufzeit haben, wobei diese Latenz typischerweise im Millisekunden-Bereich liegt.

Weiterhin bevorzugt ist vorgesehen, dass in Zeiten, in denen ein kritischer Zustand der Datenübertragung vorliegt, keine Übertragung von Schlüsselinformationen zwischen den wenigstens zwei Kommunikationspartnern erfolgt und/oder kein neuer Schlüssel für die wenigstens zwei Kommunikationspartner beschafft und/oder kein Schlüsselwechsel durchgeführt wird. Es sei angemerkt, dass ein Schlüsselwechsel insbesondere dann auch in Zeiten durchgeführt werden kann, in denen ein kritischer Zustand der Datenübertragung vorliegt, wenn bereits vorausgetauschte Schlüssel vorhanden sein sollten, insbesondere für den Wechsel kein Austausch an Schlüsselinformationen erforderlich, der zusätzlichen Datenverkehr darstellen würde.

Alternativ oder zusätzlich wird die Aufgabe bei einem Verfahren der eingangs genannten Art dadurch gelöst, dass Informationen über den zukünftigen Zustand des Daten-, insbesondere Nutzdatenverkehr bereitgestellt werden, und für den Fall, dass gemäß den Informationen ein kritischer Zustand der Datenübertragung bevorsteht, unabhängig davon, ob Bedarf an wenigstens einem neuen Schlüssel besteht, vor dem Eintreten des kritischen Zustandes gezielt eine Übertragung von Schlüsselinformationen zwischen den wenigstens zwei Kommunikationspartnern erfolgt und/oder wenigstens ein neuer Schlüssel für die wenigstens zwei Kommunikationspartner beschafft und/oder wenigstens ein Schlüsselwechsel durchgeführt wird. Bevorzugt ist vorgesehen, dass in einem vorgegebenen zeitlichen Abstand vor dem Eintreten des kritischen Zustandes gezielt eine Übertragung von Schlüsselinformationen zwischen den wenigstens zwei Kommunikationspartnern erfolgt und/oder wenigstens ein neuer Schlüssel für die wenigstens zwei Kommunikationspartner beschafft und/oder wenigstens ein Schlüsselwechsel durchgeführt wird

Weiterhin kann vorgesehen sein, dass von wenigstens einer und/oder für wenigstens eine bevorzugt industrielle Applikation, insbesondere Automatisierungsapplikation, Nutzdaten zwischen den wenigstens zwei Kommunikationspartnern übertragen werden, und die Applikation die Informationen über den zukünftigen Zustand des Datenverkehrs bereitstellt.

Bevorzugt werden Informationen über den zukünftigen Zustand des Datenverkehrs an der Stelle wenigstens eines der wenigstens zwei Kommunikationspartner bereitgestellt, insbesondere Informationen über den zukünftigen Zustand des Daten-, insbesondere Nutzdatenverkehrs durch den wenigstens einen der wenigstens zwei Kommunikationspartner.

Es sei angemerkt, dass insbesondere für den Fall, dass die Kommunikationspartner in Form von Gateways vorliegen, der Zustand des Datenverkehrs durch wenigstens einen der Kommunikationspartner betrachtet wird. Im Allgemeinen können - alternativ oder zusätzlich - natürlich auch Daten betrachtet werden, die auf einem Kommunikationspartner, beispielsweise einer PLC, oder auch an anderer Stelle in einem Netzwerk erzeugt werden.

Der Grundgedanke der vorliegenden Erfindung besteht mit anderen Worten darin, die Erneuerung kryptographischer Schlüssel gezielt möglichst in Zeiten durchzuführen, in denen seitens des Nutzdatenverkehrs, der beispielsweise von einer industriellen Anwendung, etwa einer Automatisierungslösung stammen und/oder dieser dienen kann, keine bzw. nur vergleichsweise niedrige Anforderungen insbesondere bezüglich Bandbreite und/oder Latenz und/oder Jitter und/oder Dienstgüte (Quality of Service, QoS) bestehen. Liegen niedrige Anforderungen insbesondere in dieser Hinsicht vor, wird vorliegend von einem unkritischen Zustand ausgegangen, insbesondere einen in Bezug auf eine bzw. für einen zusätzlichen Austausch von Schlüsselinformationen unkritischen Zustand der Datenübertragung. Insbesondere wird vorgeschlagen, in Zeiten geringer Nutzdaten-Auslastung, wenn ein unkritischer Zustand der Datenübertragung vorliegt, kontinuierlich bzw. sich wiederholend, insbesondere in vorgegebenen zeitlichen Abstände, Schlüssel-Updates durchzuführen, dies unabhängig davon, ob Bedarf besteht oder nicht, und/oder vorausschauend ein Schlüssel-Update durchzuführen oder zumindest vorzubereiten, insbesondere vor einer zeitkritischen Datenübertragung, beispielsweise einer zeitkritischen Steuerungsoperation.

Wird in einem unkritischen Zustand bzw. Zeiten, in denen sich der Datenverkehr in einem unkritischen Zustand befindet, insbesondere solange nur eine geringe Datenrate für die Nutzdaten erforderlich ist, die Schlüsselerneuerung kontinuierlich quasi-kontinuierlich bzw. sich bevorzugt in vorgegebenen zeitlichen Abständen wiederholend durchgeführt, dies unabhängig davon, ob ein Schlüsselvorrat erschöpft ist oder nicht, steht zu jedem beliebigen Zeitpunkt, zu dem eine hohe Datenrate erforderlich werden kann, insbesondere eine kritische Phase bevorsteht, der maximale Zeitraum zur Verfügung, während dem keine Schlüsselerneuerung nötig ist. Ein kritischer Zeitraum mit vergleichsweise hoher Datenrate, während dem bevorzugt keine Schlüsselerneuerung stattfindet, kann dann problemlos "überbrückt" werden.

Insbesondere für den Fall, dass ein Schlüsselmanagement direkt mit einer bzw. mehreren Applikationen, die einer Nutzdatenübertragung im Netzwerk bedürfen bzw. diese bedingen, beispielsweise Automatisierungsapplikation(en), interagieren kann, kann eine besonders hohe Effizienz erzielt werden. Die Applikation(en), von denen bzw. für die Nutzdaten in geschützter, etwa verschlüsselter Form zu übertragen sind, kann/können dann anzeigen, wann sie einen (ggf. auch längeren) Zeitraum mit hohem QoS (Quality of Sevice) benötigt/benötigen, also ein kritischer Zustand ansteht. Ein Schlüssel kann dann insbesondere nochmal unmittelbar vor diesem kritischen Zeitraum erneuert bzw. die Erneuerung zumindest vorbereitet werden und es steht dann der maximale Zeitraum zur Nutzung des Schlüssels zur Verfügung, wenn der kritische Zeitraum mit hoher QoS beginnt.

Ein Schlüsselmanagement kann beispielsweise in Form einer Software vorliegen. Zweckmäßiger Weise implementieren die wenigstens zwei Kommunikationspartner zumindest einen Teil des Schlüsselmanagements. Es ist durchaus möglich, insbesondere für das Gruppenschlüsselmanagement, also für den Fall von mehr als zwei Kommunikationspartnern, dass es zusätzlich eine zentrale Verwaltungsstelle gibt. Existiert eine solche Verwaltungsstelle, kann diese lediglich offline (zum Beispiel eine Zertifizierungsstelle, englisch: Certification Authority) der online in das Schlüsselmanagementprotokoll eingebunden sein. Insbesondere in der Variante mit einer zeitlichen Begrenzung des Schlüssellebensdauer kann auch vorgesehen sein, dass die Schlüsselerneuerung seitens einer zentralen Stelle initiiert wird.

Die erfindungsgemäße Vorgehensweise ermöglicht eine besonders effiziente Nutzung zur Verfügung stehender Netzwerkressourcen, insbesondere Bandbreite. Dies auch für den Fall, dass Nutzdaten und Schlüsselinformationen zwischen zwei (oder mehr) Kommunikationspartnern auf dem gleichen Wege, insbesondere auf dem oder den gleichen Netzwerkpfaden übertragen werden. Auf eine Out-of-Band-Lösung oder eine feste Aufteilung der Bandbreite in einen Teil für die Nutzdaten und einen Anteil für das Schlüsselmanagement ist nicht erforderlich.

Unter einem Schlüssel, insbesondere kryptographischen Schlüssel ist bevorzugt eine Datei oder ein Datum zu verstehen, mittels derer bzw. mittels dem eine Verschlüsselung und/oder eine Entschlüsselung und/oder eine Authentifizierung und/oder eine Verifikation und/oder eine Integritätsprüfung von Daten, insbesondere Nutzdaten möglich ist, und/oder ein Integritätsschutz für Daten, insbesondere Nutzdaten gewährleistet werden kann. Es kann sein, dass für die Ver- und Entschlüsselung von Daten der gleiche Schlüssel zum Einsatz kommt (symmetrische Verfahren) oder für die Ver- und die Entschlüsselung verschiedene Schlüssel zum Einsatz kommen (asymmetrische Verfahren) .

Dass Schlüssel zum Einsatz kommen, deren Gültigkeit begrenzt ist, bedeutet insbesondere, dass die Schlüssel nicht beliebig oft und/oder lange verwendet werden können bzw. sollen, sondern "ablaufen", dies insbesondere nach einer vorgegebenen Anzahl von Verwendungen und/oder nach Ablauf einer vorgegebenen Gültigkeitsdauer. Abgelaufene Schlüssel dürfen in der Regel nicht mehr für weitere Vorgänge zum Schutz von Nutzdaten, insbesondere nicht mehr für weitere Verschlüsselungsvorgänge genutzt werden.

Unter Schlüsselinformationen sind insbesondere solche Informationen bzw. Daten zu verstehen, die der Abwicklung eines kryptographischen Protokolls zur Schlüsselerneuerung und/oder dem Schlüsselmanagement dienen. Rein beispielhaft für solche Protokolle seien Password Autheticated Key Exchange (zum Beispiel J-PAKE, siehe insbesondere ISO/IEC 11770-4 (2017) und RFC 8236, oder SRP) und der (authentifizierte) Diffie-Hellmann Schlüsseltausch genannt (siehe insbesondere https://de.wikipedia.org/wiki/Diffie-Hellman-Schlüsselaustausch) .

Die Unterscheidung, ob ein unkritischer oder kritischer Zustand der Datenübertragung vorliegt bzw. bevorsteht, kann beispielsweise anhand eines oder mehrere Datenübertragungs-Parameter getroffen werden. Eine weitere bevorzugte Ausführungsform zeichnet sich daher dadurch aus, dass von einem unkritischen Zustand ausgegangen wird, wenn wenigstens ein den Daten-, insbesondere Nutzdatenverkehr repräsentierender oder zu diesem gehöriger Parameter, insbesondere die für die Datenübertragung genutzte Bandbreite und/oder die Datenrate und/oder die Paketgröße und/oder die Anzahl weitergeleiteter Datenpakete pro Zeiteinheit, einen vorgegebenen Wert unterschreitet oder dem vorgegebenen Wert entspricht.

Auch kann vorgesehen sein, dass von einem unkritischen Zustand ausgegangen wird, wenn wenigstens ein den Daten-, insbesondere Nutzdatenverkehr repräsentierender oder zu diesem gehöriger Parameter, einen bestimmten Anteil des im Netzwerk maximal verfügbaren Wertes dieses Parameters unterschreitet. Rein beispielhaft sei genannt, das von einem unkritischen Zustand ausgegangen wird, wenn ≤90% oder ≤80% oder ≤70% oder ≤60% oder ≤40% oder ≤30% oder ≤20% der insgesamt zur Verfügung stehenden Bandbreite (aktuell bzw. in Zukunft) genutzt werden.

Alternativ oder zusätzlich kann von einem kritischen Zustand ausgegangen werden, wenn wenigstens ein den Daten-, insbesondere Nutzdatenverkehr repräsentierender oder zu diesem gehöriger Parameter, insbesondere die für die Datenübertragung genutzte Bandbreite und/oder die Datenrate und/oder die Paketgröße und/oder die Anzahl weitergeleiteter Datenpakete pro Zeiteinheit, einen vorgegebenen Wert überschreitet bzw. oberhalb dieses liegt.

Auch kann vorgesehen sein, dass von einem kritischen Zustand ausgegangen wird, wenn wenigstens ein den Daten-, insbesondere Nutzdatenverkehr repräsentierender oder zu diesem gehöriger Parameter, einen bestimmten Anteil des im Netzwerk maximal verfügbaren Wertes dieses Parameters überschreitet. Rein beispielhaft sei genannt, das von einem kritischen Zustand ausgegangen wird, wenn >90% oder >80% oder >70% oder >60% oder >50% oder >40% oder >30% oder >20% der insgesamt zur Verfügung stehenden Bandbreite (aktuell bzw. in Zukunft) genutzt werden.

Der vorgegebene Wert, bzw. insbesondere für den Fall, dass mehrere Parameter betrachtet werden, die vorgegebenen Werte, kann bzw. können Zustands-Grenzwerte darstellen.

Zweckmäßiger Weise wird der momentane und/oder zukünftige Zustand der Daten-, insbesondere Nutzdatenübertragung an wenigstens einer Stelle im Netzwerk, beispielsweise an der Stelle wenigstens eines der Kommunikationspartner betrachtet.

Eine weitere Ausführungsform des erfindungsgemäßen Verfahrens zeichnet sich entsprechend dadurch aus, dass überwacht wird, ob sich der Daten- insbesondere Nutzdatenverkehr an wenigstens einer Stelle im Netzwerk in einem kritischen oder unkritischen Zustand befindet

Erfolgt eine Überwachung des Zustandes an der Stelle wenigstens eines der Kommunikationspartner, wird insbesondere derjenige Datenverkehr überwacht, der von dem wenigstens einen und/oder durch den wenigstens einen Kommunikationspartner weitergeleitet wird.

Die Überwachung des Daten- insbesondere Nutzdatenverkehrs kann auch erfolgen, indem wenigstens eine Anwendung, welche Daten-, insbesondere Nutzdatenverkehr bedingt, bzw. mit welcher ein solcher einhergeht, überwacht wird und/oder Informationen liefert. Die wenigstens eine Anwendung kann insbesondere darauf hin überwacht werden und/oder darüber Informationen liefern, ob Programmunterbrechungen, insbesondere sogenannten Interrupts, eintreten und/oder bevorstehen. Ein bevorstehender bzw. eintretender Interrupt kann dann beispielsweise dahingehend interpretiert werden, dass der Daten-, insbesondere Nutzdatenverkehr unter einen vorgegebenen Wert fallen wird bzw. gefallen ist oder auch über einen vorgegebenen Wert steigen wird bzw. gestiegen ist. Ein Schlüsselwechsel bzw. eine Übertragung von Schlüsselinformationen kann beispielsweise während eine Anwendung läuft unterbunden werden und dann in Reaktion auf eine Unterbrechung/einen Interrupt der Anwendung erfolgen. Der umgekehrte Fall ist ebenfalls möglich. Beispielsweise kann das Eintreten eines kritischen Zustandes, beispielsweise von Realtime-States, Nicht-unterbrechbaren Operationen, etc., durch einen Interrupt angezeigt werden.

Interrupts können gemäß dieser Ausführungsform gezielt genutzt werden, um einem Schlüsselmanagement mitzuteilen, dass ein unkritischer oder kritischer Zeitpunkt beispielsweise in einer Automatisierungsapplikation erreicht wurde, ab dem eine Schlüsselerneuerung (wieder) oder auch nicht (mehr) durchgeführt werden kann.

An welcher Stelle bzw. welchen Stellen der Zustand des Datenverkehrs überwacht wird, kann variieren, insbesondere in Abhängigkeit des Anwendungsfalles. Dabei können verschiedene Faktoren berücksichtigt werden, beispielsweise, wie teuer bzw. Ressourcen-aufwändig die Überwachung ist, ggf., wie kompliziert es ist, auszuhandeln bzw. festzulegen, wer, insbesondere der Kommunikationspartner oder weiterer Netzwerkteilnehmer, überwachen soll, und/oder welcher der Kommunikationspartner besser beurteilen kann, wann ein Schlüssel erschöpft ist.

Darüber hinaus kann vorgesehen sein, dass, solange ein kritischer Zustand der Datenübertragung vorliegt, insbesondere wenigstens ein den Daten-, insbesondere Nutzdatenverkehr repräsentierender oder zu diesem gehöriger Parameter, insbesondere die für die Datenübertragung genutzte Bandbreite und/oder die Datenrate und/oder die Paketgröße und/oder die Anzahl weitergeleiteter Datenpakete pro Zeiteinheit, einen vorgegebenen Wert und/oder einen vorgegebenen Anteil eines maximal möglichen Wertes wenigstens eines den Daten-, insbesondere Nutzdatenverkehr repräsentierenden oder zu diesem gehörigen Parameter überschreitet, ein vorhandener Schlüssel insbesondere so lange wie möglich verlängert wird. Dann wird insbesondere die Periode des vorhandenen Schlüssels verlängert. Es kann auch vorgesehen sein, dass ein Kommunikationspartner, der Kenntnis über den wenigstens einen Parameter hat, ein Wartesignal an wenigstens einen weiteren Kommunikationspartner sendet. Über das Wartesignal kann dem wenigstens einen weiteren Kommunikationspartner angezeigt werden, dass ein Schlüsselwechsel zu einem anderen Zeitpunkt stattfinden soll.

In besonders bevorzugter Ausgestaltung handelt es sich bei den wenigstens zwei Kommunikationspartnern, zwischen denen Nutzdaten in geschützter, insbesondere verschlüsselter Form zu übertragen sind und/oder übertragen werden, um Gateways, insbesondere Sicherheits-Gateways. Zwischen den Gateways, insbesondere Sicherheits-Gateways ist bevorzugt eine geschützte und/oder zu schützende Netzwerkstrecke eingerichtet. Rein beispielhaft für eine solche sei eine VPN-Verbindung bzw. ein VPN-Tunnel genannt. Die Abkürzung VPN steht dabei für "Virtual Privat Network", also ein virtuelles privates Netzwerk.

Die Kommunikationspartner können prinzipiell in Form von Geräten oder Einheiten beliebiger Ausgestaltung vorliegen. Es ist möglich, dass diese teilweise oder vollständig softwareimplementiert sind.

Darüber hinaus kann vorgesehen sein, dass im Rahmen einer oder auch jeder Schlüsselerneuerung (jeweils) nur ein neuer Schlüssel beschafft wird. Auch ist es möglich, dass jeweils zwei oder mehr neue Schlüssel beschafft und/oder an die betroffenen Kommunikationspartner verteilt werden. Dann kann gegebenenfalls ein lokaler Schlüsselwechsel "on-the-fly" durchgeführt werden.

Auch kann vorgesehen sein, dass die Identifizierung, welcher Schlüssel aktuell zu verwenden ist, über eine in einem Nutzdatenpaket enthaltene ID erfolgt bzw. signalisiert wird. Hat beispielsweise ein Kommunikationspartner, welcher Datenpakete geschützt, beispielsweise verschlüsselt und an einen oder mehrere weitere Kommunikationspartner sendet, den Schlüssel gewechselt, und ist immer eine ID des aktuell verwendeten Schlüssels in den gesendeten Datenpaketen enthaltet, kann der bzw. können die empfangenden Kommunikationspartner an dem bzw. den Datenpaketen den Schlüsselwechsel erkennen und auch für die Entschlüsselung auf den neuen Schlüssel zugreifen, den sie dann insbesondere bereits gespeichert haben.

Ein weiterer Gegenstand der Erfindung ist ein Kommunikationsgerät, das insbesondere zur Durchführung des Verfahrens nach einem der vorhergehenden Ansprüche ausgebildet und/oder eingerichtet ist. Dieses umfasst bevorzugt eine Überwachungseinheit, welche ausgebildet und/oder eingerichtet ist, um zu überwachen, ob sich der Daten-, insbesondere Nutzdatenverkehr durch das Kommunikationsgerät in einem kritischen oder unkritischen Zustand befindet, und/oder eine Eingabeeinheit, welche ausgebildet und/oder eingerichtet ist, um Informationen über einen momentanen und/oder zukünftigen Zustand des Daten-, insbesondere Nutzdatenverkehr zu empfangen, und eine mit der Überwachungseinheit und/oder der Eingabeeinheit verbundene Steuereinheit, welche eine Übertragung von Schlüsselinformationen insbesondere an wenigstens einen weiteren Kommunikationspartner und/oder das Durchführen eines Schlüsselwechsels und/oder die Beschaffung wenigstens eines neuen Schlüssels in Abhängigkeit der Überwachung des Zustandes des Datenverkehrs und/oder empfangener Informationen über den momentanen und/oder zukünftigen Zustand des Datenverkehrs veranlasst.

Das erfindungsgemäße Kommunikationsgerät hat sich als besonders geeignet für die Durchführung des erfindungsgemäßen Verfahrens erwiesen.

Ein weiterer Gegenstand der Erfindung ist ein Computerprogramm, das Programmcodemittel zur Durchführung der Schritte des erfindungsgemäßen Verfahrens zur Datenüberkommunikation umfasst.

Schließlich ist Gegenstand der Erfindung ein computerlesbares Medium, das Instruktionen umfasst, die, wenn sie auf wenigstens einem Computer ausgeführt werden, den wenigstens einen Computer veranlassen, die Schritte des erfindungsgemäßen Verfahrens zur Datenkommunikation durchzuführen.

Bei dem computerlesbaren Medium kann es sich beispielsweise um eine CD-ROM oder DVD oder einen USB oder Flash Speicher handeln. Es sei angemerkt, dass unter einem computerlesbaren Medium nicht ausschließlich ein körperliches Medium zu verstehen sein soll, sondern ein solches beispielswiese auch in Form eines Datenstromes und/oder eines Signals, welches einen Datenstrom repräsentiert, vorliegen kann.

Weitere Merkmale und Vorteile der vorliegenden Erfindung werden anhand der nachfolgenden Beschreibung erfindungsgemäßer Ausführungsformen unter Bezugnahme auf die beiliegende Zeichnung deutlich. Darin ist
- FIG 1: eine rein schematische Teildarstellung eines industriellen Netzwerkes;
- FIG 2: eine rein schematische Darstellung eines Ausführungsbeispiel eines erfindungsgemäßen Kommunikationsgerätes;
- FIG 3: eine rein schematische Darstellung zu Datenverkehr und Schlüsselmanagement;
- FIG 4: ein Flussdiagramm mit Schritten für eine Schlüsselerneuerung; und
- FIG 5: eine weitere rein schematische Darstellung zu Datenverkehr und Schlüsselmanagement.

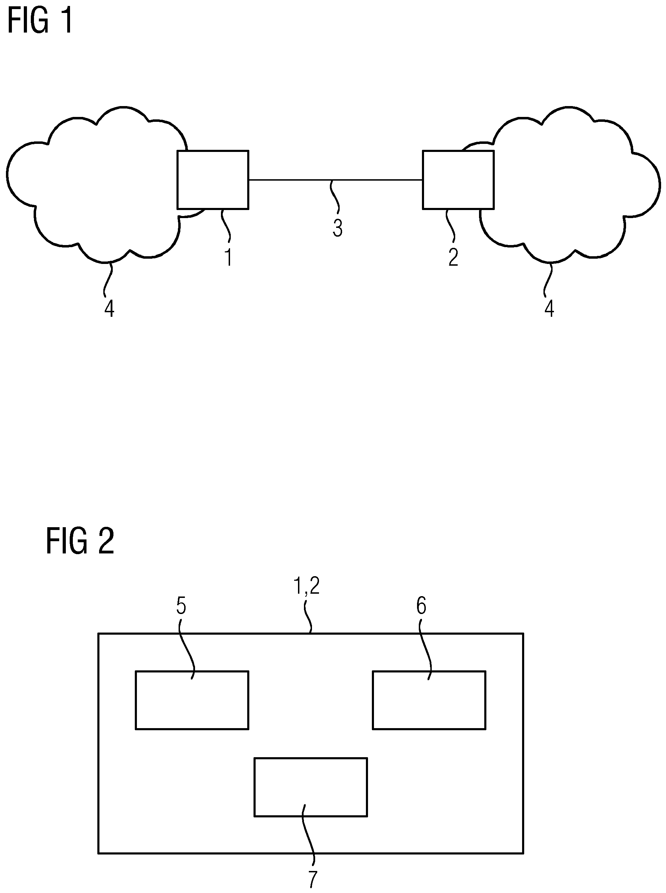

Die FIG 1 zeigt in rein schematischer Teildarstellung ein industrielles Netzwerk, wobei von diesem lediglich zwei Netzwerkteilnehmer gezeigt sind, die Kommunikationspartner 1, 2 darstellen. In der stark vereinfachten FIG 1 sind die beiden Kommunikationspartner 1, 2 durch eine Linie 3 miteinander verbunden dargestellt. Es versteht sich, dass zwischen den beiden Kommunikationspartnern 1, 2 weitere Netzwerkteilnehmer bzw. Geräte angeordnet sind bzw. sein können, wobei beispielhaft Bridges und/oder Switches genannt seien.

Im Rahmen des hier beschriebenen Ausführungsbeispiels bildet jeder der beiden Kommunikationspartner 1, 2 ein Sicherheits-Gateway und hinter dem jeweiligen Kommunikationspartner 1, 2 liegende Teile des Netzwerkes bzw. Subnetze sind in der FIG 1 nur rein schematisch durch mit dem Bezugszeichen 4 versehene Wolken angedeutet. Zwischen den beiden Kommunikationspartnern 1, 2 ist eine geschützte bzw. zu schützende Netzwerkstrecke eingerichtet. Rein beispielhaft sei für eine solche eine VPN-Verbindung bzw. ein VPN-Tunnel genannt.

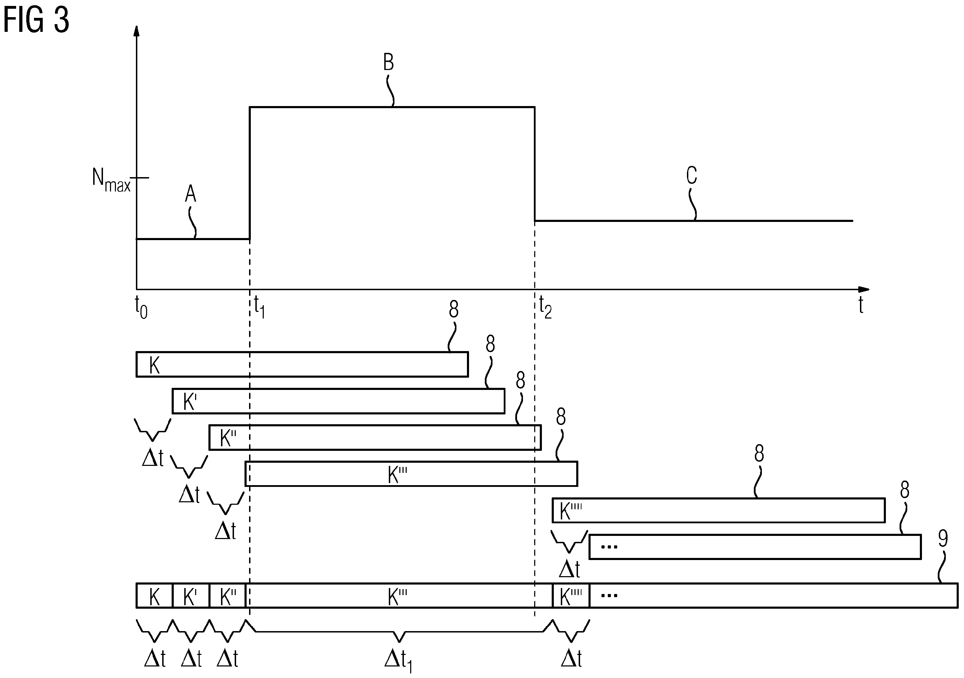

Zwischen den zwei Kommunikationspartnern 1, 2 sind Nutzdaten in geschützter, insbesondere verschlüsselter Form zu übertragen bzw. werden Nutzdaten in geschützter, insbesondere verschlüsselter Form übertragen. Der Nutzdatenaustausch ist dabei für eine Automatisierungsapplikation erforderlich, welche der Automatisierung eines in den Figuren nicht dargestellten technischen Prozesses dient. Der Datenaustausch bzw. die Datenübertragung erfolgt, indem Datenpakete in geschützter, insbesondere verschlüsselter Form von dem in FIG 1 linken Kommunikationspartner 1 an den in FIG 1 rechten Kommunikationspartner 2 übertragen werden und umgekehrt. Der Schutz, insbesondere die Verschlüsselung mit einem kryptografischen Schlüssel K-K'''' (siehe FIG 3) erfolgt dabei in hinlänglich vorbekannter Weise jeweils von dem sendenden und die Aufhebung des Schutzes, insbesondere die Entschlüsselung von dem empfangenden Kommunikationspartner 1, 2. Beide Kommunikationspartner 1, 2 müssen entsprechend den jeweils verwendeten Schlüssel kennen.

Vorliegend kommen in ebenfalls an sich bekannter Weise Schlüssel zum Einsatz, die sich durch eine begrenzte Gültigkeit auszeichnen. Das bedeutet, die Schlüssel K-K'''' können nur für eine in der Regel vorgegebene Anzahl von kryptografischen Anwendungen bzw. kryptografischen Berechnungen, beispielsweise Verschlüsselungsvorgängen, und/oder eine vorgegebene Gültigkeitsdauer verwendet werden. Ist die Gültigkeit eines Schlüssels K-K'''' abgelaufen, ist eine Schlüsselerneuerung erforderlich. Die Abwicklung der Schlüsselerneuerung erfolgt in an sich bekannter Weise über ein Schlüsselmanagement bzw. unter Verwendung eines geeigneten Protokolls, beispielsweise J-PAKE, SRP oder Diffie-Hellmann-Schlüsseltausch. Dies ist selbstverständlich beispielhaft zu verstehen und es können gleichermaßen andere aus dem Stand der Technik hinlänglich vorbekannte Protokolle zum Einsatz kommen.

Insbesondere, um das Schlüsselmaterial jeweils rechtzeitig zu erneuern, sind zwischen den Kommunikationspartnern 1, 2 neben den eigentlichen, mit einem Schlüssel K-K'''' geschützten Nutzdaten, zusätzliche Informationen auszutauschen. Diese zusätzlichen Informationen, die vorliegend als Schlüsselinformationen bezeichnet werden, sind für eine Erneuerung und/oder Verwaltung von Schlüsseln K-K'''' erforderlich. Insbesondere dienen die Schlüsselinformationen der Abwicklung des Protokolls für die Schlüsselerneuerung.

Die zwischen den beiden Kommunikationspartnern 1, 2 zu übertragenden Schlüsselinformationen stellen zusätzlichen Datenverkehr im Netzwerk dar, welcher auf dem gleichen Wege, insbesondere auf dem bzw. den gleichen Netzwerkpfaden wie die eigentlichen zu verschlüsselnden Nutzdaten zu übertragen ist. Dieser zusätzliche Datenaustausch kann sich nachteilig auf den Austausch der Nutzdaten auswirken. Für die Übermittlung der Schlüsselinformationen wird Bandbreite benötigt, die nicht mehr für Nutzdaten zur Verfügung steht. Außerdem entstehen zusätzlich Latenz und Jitter.

Unter Durchführung eines Ausführungsbeispiels des erfindungsgemäßen Verfahrens kann eine negative Wechselwirkung vermieden bzw. reduziert werden, wobei gleichzeitig eine besonders effiziente Nutzung der zur Verfügung stehenden Netzwerkressourcen möglich ist.

Konkret ist vorgesehen, die Erneuerung kryptographischer Schlüssel K-K'''' gezielt in Zeiten durchzuführen, in denen seitens des Nutzdatenverkehrs der Automatisierungsapplikation keine bzw. nur vergleichsweise niedrige Anforderungen insbesondere bezüglich Bandbreite, Latenz und/oder Jitter bestehen, konkret ein unkritischer Zustand der Nutzdatenübertragung vorliegt. Bevorzugt wird, wenn momentan ein unkritischer Zustand der Nutzdatenübertragung vorliegt, jedoch ein kritischer Zeitraum, in dem die Nutzdatenübertragung für die Automatisierungsapplikation eine hohe QoS (Quality of Service) benötigt, gezielt vorausschauend ein Schlüsselupdate durchgeführt.

Um dies zu realisiere, umfassen die Kommunikationspartner 1, 2 jeweils eine Überwachungseinheit 5, welche ausgebildet und eingerichtet ist, um zu überwachen, ob sich der Nutzdatenverkehr durch den jeweiligen Kommunikationspartner 1, 2 in einem kritischen oder unkritischen Zustand befindet.

Weiterhin umfasst jeder der beiden Kommunikationspartner 1, 2 eine Eingabeeinheit 6, welche ausgebildet und eingerichtet ist, um Informationen über einen zukünftigen Zustand des Nutzdatenverkehrs zu empfangen.

Im Rahmen des vorliegenden Ausführungsbeispiels erhält die Eingabeeinheit 6 Informationen über den zukünftigen Zustand von der Automatisierungsapplikation, für welche die Nutzdaten zwischen den Kommunikationspartnern 1, 2 zu übertragen sind. Schließlich umfasst jeder der beiden Kommunikationspartner 1, 2 eine mit der Überwachungseinheit 5 und der Eingabeeinheit 6 verbundene Steuereinheit 7, welche eine Übertragung von Schlüsselinformationen von dem jeweiligen Kommunikationspartner 1, 2 an den anderen Kommunikationspartner 1, 2 und/oder das Durchführen eines Schlüsselwechsels und/oder die Beschaffung wenigstens eines neuen kryptographischen Schlüssels in Abhängigkeit der Überwachung des Zustandes des Datenverkehrs und/oder in Abhängigkeit der Informationen über den zukünftigen Zustand des Datenverkehrs veranlasst.

Eine vergrößerte, rein schematische Darstellung der Kommunikationspartner 1, 2 mit den Einheiten 5, 6, 7 ist in FIG 2 gezeigt.

Die FIG 3 enthält eine schematische Darstellung zu einem Beispiel einer möglichen Strategie für die Schlüsselerneuerung. Dabei ist im oberen Teil von FIG 3 ein Skalierungs- und Einheiten-loser Graph gezeigt, in welchem die Nutzdatenrate N durch die Kommunikationspartner 1, 2 über der Zeit t aufgetragen ist.

Es sei angemerkt, dass insbesondere für den Fall, dass die Kommunikationspartner in Form von Gateways vorliegen, die Nutzdatenrate durch wenigstens einen der Kommunikationspartner betrachtet wird. Im Allgemeinen können - alternativ oder zusätzlich - auch Daten betrachtet werden, die auf einem Kommunikationspartner, beispielsweise einer PLC, oder auch an anderer Stelle in einem Netzwerk erzeugt werden.

Man erkennt, dass sich an einen ersten Abschnitt A mit vergleichsweise niedriger Nutzdatenrate ein zweiter Abschnitt B mit deutlich höherer Nutzdatenrate anschließt, und die Nutzdatenrate in einem Abschnitt C dann wieder auf einen deutlich niedrigeren Wert abfällt. In den drei Abschnitten A, B, C ist die Nutzdatenrate - insbesondere aus Gründen der vereinfachten Darstellung - konstant. In den Abschnitten A und C liegt die Nutzdatenrate N unterhalb eines vorgegebenen maximalen Wertes Nₘₐₓ, welcher auf der Y-Achse des Graphen markiert ist. Für den Fall, dass die Nutzdatenrate unterhalb von Nₘₐₓ liegt bzw. diesem Wert entspricht, wird vorliegend von einem unkritischen Zustand der Datenübertragung ausgegangen. Liegt die Nutzdatenrate hingegen oberhalb von Nₘₐₓ, liegt ein kritischer Zustand der Datenübertragung vor. Die zugehörige Überwachung und Zustandsbestimmung bzw. -ableitung wird mittels der Überwachungseinheit 5 eines der beiden Kommunikationspartner 1, 2 oder auch den Überwachungseinheiten 5 beider Kommunikationspartner 1, 2 durchgeführt.

Solange nur eine vergleichsweise geringe Datenrate für die Nutzdaten erforderlich ist, konkret N ≤ Nₘₐₓ ist, wird die Schlüsselerneuerung quasi kontinuierlich, nämlich in vorgegebenen zeitlichen Abständen Δt wiederholend durchgeführt.
Dies erfolgt unabhängig davon, ob der aktuelle Schlüsselvorrat erschöpft ist oder nicht, also unabhängig davon, ob überhaupt Bedarf an neuen Schlüsseln besteht oder nicht.

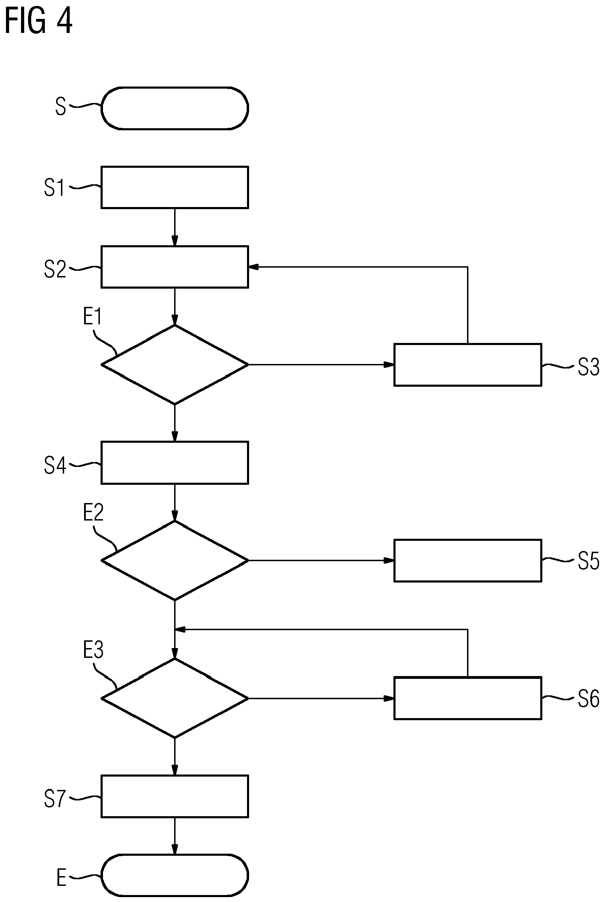

Bei dem in FIG 3 dargestellten Beispiel findet über den Zeitabschnitt A viermal hintereinander eine Schlüsselerneuerung statt. Dabei wird zunächst durch eine Schlüsselerneuerung bzw. ein Schlüsselupdate der Schlüssel K beschafft (bei t=t₀). Die garantierte und/oder prognostizierte Mindestnutzdauer des Schlüssels K ist in der FIG 4 durch einen mit dem Bezugszeichen 8 versehenen Balken angedeutet. Nach Ablauf einer Zeitspanne Δt wird, obwohl der Schlüssel K noch gültig ist, also kein Bedarf an einem oder mehreren neuen Schlüsseln besteht, ein Schlüsselupdate durchgeführt und ein Schlüssel K' beschafft, der sich durch die gleiche garantierte und/oder prognostizierte Mindestnutzdauer auszeichnet. Nach Ablauf der Zeitspanne Δt findet eine weitere Erneuerung statt und es wird der Schlüssel K'' unter Durchführung eines Schlüsselupdates beschafft. Das Ganze geschieht noch ein weiteres Mal, wieder nach Ablauf der Zeitspanne Δt, so dass der Schlüssel K''' beschafft wird. Es sei angemerkt, dass der zeitliche Abstand ΔT bzw. der Update-Zyklus deutlich unterhalb der durch mit der Bezugsziffer 8 versehenen Balken repräsentierten garantierten und/oder prognostizierten Mindestnutzdauer liegt. Bevorzugt liegt die garantierte und/oder prognostizierte Mindestnutzdauer 8 im Bereich von Stunden oder Tagen und ΔT um eine oder zwei Größenordnungen darunter, beispielsweise im Bereich von einer oder einigen oder einigen zehn Sekunden oder einer oder einigen oder einigen zehn Minuten. Die Schlüsselnutzung ist ebenfalls schematisch in FIG 3 dargestellt, konkret durch ein mit dem Bezugszeichen 9 versehenen Balken. Wie man erkennt, wird ab dem Zeitpunkt t₀ zunächst der erste Schlüssel K genutzt. Nach Ablauf der Zeitspanne Δt wird der Schlüssel K', nach erneuten Ablauf von Δt dann der Schlüssel K'' und anschließend K''' genutzt.

Unmittelbar im Anschluss an die Beschaffung des Schlüssels K''' und den Wechsel auf diesen, tritt ein deutlicher Anstieg der Nutzdatenrate durch die Kommunikationspartner 1, 2 auf (zum Zeitpunkt t₁). Dies ist darauf zurückzuführen, dass die Automatisierungsapplikation ab diesem Zeitpunkt die Übertragung einer höheren Datenmenge bzw. mit größerer QoS erfordert.

Sobald diese höhere Datenrate vorliegt, wird die Schlüsselerneuerung gestoppt. Das heißt, wenn die Nutzdatenrate oberhalb von Nₘₐₓ steigt bzw. liegt, findet keine Schlüsselerneuerung mehr statt und es werden keine Schlüsselinformationen zwischen den beiden Kommunikationspartnern 1, 2 zusätzlich zu den Nutzdaten übertragen. Der zuletzt genutzte Schlüssel K"' wird weiter benutzt, konkret über die gesamte Zeitdauer t₁ bis t₂, in der eine hohe Nutzdatenrate vorliegt (Abschnitt B) .

Da über den Zeitraum eines unkritischen Zustandes der Datenübertragung (währen die Nutzdatenrate N ≤ Nₘₐₓ war) die Schlüsselerneuerung gezielt kontinuierlich bzw. in vorgegebenen, im Vergleich zu der garantierten und/oder prognostizierte Mindestnutzdauer der Schlüssel kurzen zeitlichen Abständen durchgeführt wurde, dies auch ohne dass ein Bedarf an neuem Schlüsselmaterial bestand, steht zu dem Zeitpunkt t₁, an welchem die Nutzdatenrate über Nₘₐₓ ansteigt und ein kritischer Zustand vorliegt, der maximale Zeitraum, während dem keine Schlüsselerneuerung nötig ist, zur Verfügung. Der Zeitraum mit erhöhter Nutzdatenrate (Abschnitt B) kann, wie in der FIG 3 erkennbar, mit dem Gültigkeitszeitraum des Schlüssels K"' "überbrückt" werden. Wie ebenfalls in der FIG 3 eingezeichnet, wird der Schlüssel K''' über den Zeitraum Δt₁ genutzt, welcher den Zeitraum Δt erkennbar überschreitet.

Zu dem Zeitpunkt t₂ sinkt die Nutzdatenrate N wieder auf einen Wert unterhalb von Nₘₐₓ, was von der Überwachungseinheit 5 registriert wird. Im Lichte dessen findet dann wieder eine Schlüsselerneuerung statt und es wird ein Schlüssel K"" und - solange die Nutzdatenrate weiterhin unter dem maximalen Wert von Nₘₐₓ bleibt - jeweils nach Ablauf der Zeit Δt wieder ein neuer Schlüssel beschafft. Die Beschaffung weiterer Schlüssel ist in der FIG 4 durch einen Balken 8 mit "..." angedeutet. Die neuen Schlüssel werden jeweils wieder nur für den gegenüber ihrer Gültigkeitsdauer verkürzten Zeitraum Δt genutzt, es sei denn, es steht wieder ein Anstieg der Nutzdatenrate auf einen Wert oberhalb von Nₘₐₓ an.

Die Steuerung der Schlüsselerneuerung in Abhängigkeit der mittels der Überwachungseinheit 5 überwachten Nutzdatenrate erfolgt mittels der Steuereinheit 7 (vgl. FIG 2) eines oder auch beider Kommunikationspartner 1, 2. Sofern die Schlüsselerneuerung von beiden Kommunikationspartnern 1, 2 gleichzeitig angestoßen wird, ist zweckmäßiger Weise eine Synchronisation vorgesehen. Auch ist es möglich, dass dann eine Prioritätssteuerung vorgesehen ist, die entscheidet, welcher Kommunikationspartner 1, 2 "gewinnt".

Die FIG 4 zeigt ein Flussdiagramm mit den Schritten für eine Schlüsselerneuerung.

Darin repräsentiert das mit dem Bezugszeichen S versehene Oval einen möglichen Ausgangs- bzw. Startzeitpunkt. Zu diesem steht ein initialer Schlüssel für den Schutz, etwa die Verschlüsselung von Nutzdatenpaketen, welche der Kommunikationspartner 1 in geschütztem Zustand an den Kommunikationspartner 2 übersenden möchte, zur Verfügung. Als Startpunkt kann beispielsweise der Zeitpunkt t₀ gemäß FIG 3 angenommen werden.

In einem sich anschließenden Schritt S1 findet eine Initialisierung statt und es wird ein Schlüssel (Session key) etabliert. Vorliegend wird der erste Schlüssel K vereinbart. Dazu findet der Austausch von Schlüsselinformationen statt, um das Protokoll (z.B. J-PAKE, SRP, ...) durchzuführen.

In einem Schritt S2 wird mittels der Überwachungseinheit 5 der aktuelle Zustand des Nutzdatenverkehrs durch den Kommunikationspartner 1, 2 erfasst.

Anschließend wird eine Entscheidung E1 getroffen, ob ein kritischer Zustand der Datenübertragung vorliegt oder nicht. Die Unterscheidung, ob ein unkritischer oder ein kritischer Zustand der Datenübertragung besteht, erfolgt dabei anhand der mittels der Überwachungseinheit 5 überwachten Nutzdatenrate. Es sei angemerkt, dass alternativ oder zusätzlich dazu, dass die Nutzdatenrate überwacht und betrachtet wird, auch andere Parameter, beispielsweise die für die Nutzdatenübertragung genutzte Bandbreite und/die die Paketgröße und/oder die Anzahl weitergeleiteter Datenpakete pro Zeiteinheit überwacht und betrachtet werden kann.

Für den Fall, dass die Entscheidungsfrage, ob ein kritischer Zustand vorliegt, mit ja zu beantworten ist, wird gemäß Schritt S3 der bisherige Schlüssel behalten und weiter verwendet und es wird zu dem Schritt S2 zurückgekehrt, was in der FIG 4 durch einen entsprechenden Pfeil angedeutet ist. Es sein angemerkt, dass der weiter verwendete Schlüssel insbesondere über eine Schlüssel-ID identifizierbar ist. Eine Schlüssel-ID kann beispielweise in Form eines fortlaufenden Generationszählers vorliegen. Alternativ oder zusätzlich kann ein kryptografischer Hash des Schlüsselwertes verwendet werden. Die ID des aktuellen Schlüssels kann beispielsweise mit jedem Datenpaket übertragen werden, was sehr robust ist, oder aber der Status wird unabhängig insbesondere auf allen Kommunikationspartnern getrackt, was in der Regel jedoch mit mehr Aufwand verbunden ist.

Ist hingegen die Frage, ob ein kritischer Zustand vorliegt, mit nein zu beantworten, liegt also ein unkritischer Zustand mit einer Nutzdatenrate N ≤ Nₘₐₓ vor, wird in einem Schritt S4 ein Schlüsselupdate, also eine Schlüsselerneuerung initiiert, wobei auch die Anzahl angefragter Schlüssel spezifiziert wird.

Anschließend wird die Entscheidung E2 getroffen, ob das Schlüsselupdate gültig ist. Überprüft wird insbesondere, ob das Protokoll für das Schlüssel-Update sauber abgelaufen ist, d.h., der Wert des neuen Schlüssels tatsächlich beiden Seiten bekannt ist. Hierüber kann vermieden werden, dass man sich nach einem Protokollfehler, den nur einer der Kommunikationspartner 1, 2 erkennt, in einer "Sackgasse" befindet.

Ist das Schlüsselupdate nicht gültig, wird in einem Schritt S5 ein Fehlersignal ausgegeben. Ist es hingegen zulässig bzw. berechtigt, ist erneut zu entscheiden, ob ein kritischer Zustand vorliegt oder nicht (E3). Ist dies der Fall, wird der bisherige Schlüssel in Schritt S6 weiter behalten und zum vorangegangenen Schritt bzw. zur vorangegangenen Entscheidung zurückgekehrt und erneut überprüft, ob ein kritischer Zustand vorliegt (E3). Liegt ein unkritischer Zustand vor, wird der Schlüssel in einem Schritt S7 erneuert. Der neue Schlüssel ist wiederum über eine zugehörige Schlüssel-ID identifizierbar.

Anschließend ist in ein in dem Flussdiagramm gemäß FIG 3 durch ein mit dem Bezugszeichen E versehenes Oval repräsentierter Endpunkt erreicht und der Ablauf kann erneut gestartet werden, insbesondere nach Ablauf von Δt, wie vorstehend im Zusammenhang mit FIG 3 erläutert.

Es sei angemerkt, dass für den Schlüsselwechsel so genannte Interrupts, also Programmunterbrechungen, genutzt werden können, insbesondere, um dem Schlüsselmanagement mitzuteilen, dass ein unkritischer (oder auch kritischer) Zeitpunkt in der Automatisierungsapplikation erreicht wurde und eine Schlüsselerneuerung durchgeführt werden kann (oder ausbleiben muss).

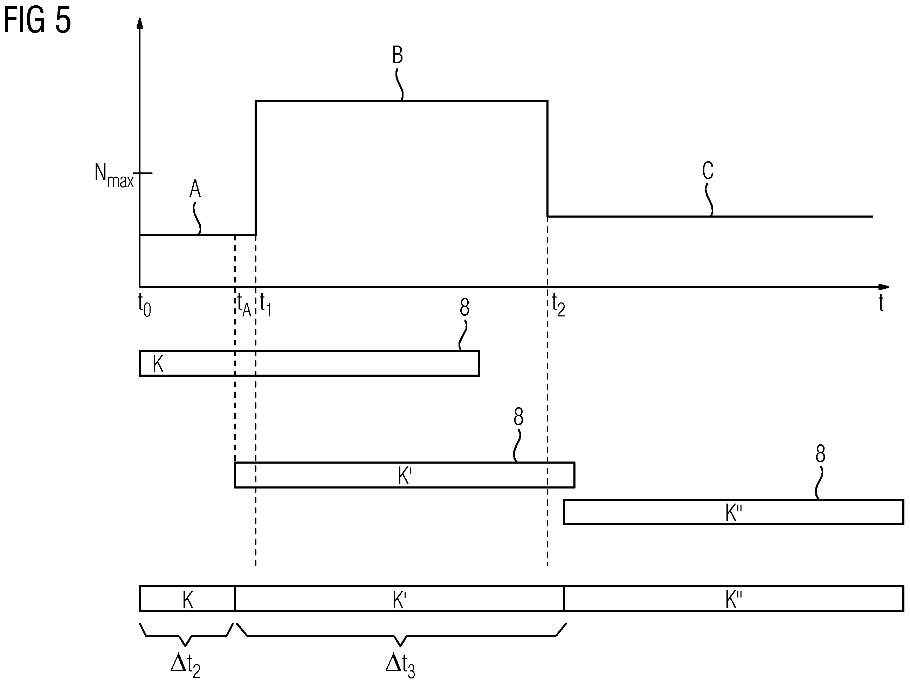

Alternativ oder zusätzlich dazu, dass eine Überwachung des momentanen Zustandes der Datenübertragung, etwa der momentanen Nutzdatenrate, mittels einer oder beider Überwachungseinheiten 5 erfolgt, und die Schlüsselerneuerung in Abhängigkeit dieser gesteuerte wird, kann eine weitere Strategie für die Schlüsselerneuerung gefahren werden. Diese ist - rein schematisch und in Analogie zu FIG 4 in FIG 5 - dargestellt ist. Gleiche Elemente sind mit gleichen Bezugszeichen versehen.

Diese Strategie ermöglicht eine besonders effiziente Nutzung der Bandbreite und kann insbesondere realisiert werden, wenn eine Interaktion bzw. Kommunikation der Automatisierungsapplikation mit dem Schlüsselmanagement möglich ist, was vorliegend der Fall ist. Dann kann vorgesehen sein, dass die Automatisierungsapplikation anzeigt, wann sie einen (ggf. längeren) Zeitraum mit vergleichsweise hohem QoS benötigt, insbesondere, wann eine Nutzdatenrate oberhalb von Nₘₐₓ in Zukunft ansteht bzw. erwartet wird. Der Schlüssel kann dann gezielt unmittelbar vor diesem Zeitraum noch einmal erneuert werden und es steht der maximale Zeitraum zur Nutzung des Schlüssels zur Verfügung.

Wie in FIG 5 dargestellt, findet zum Zeitpunkt t₀ eine Schlüsselerneuerung statt. Zum einem Zeitpunkt t_{A} erhält der Kommunikationspartner 1,2, konkret dessen Eingabeeinheit 6 die Information von der Automatisierungsapplikation, dass zum Zeitpunkt t₁ die Nutzdatenrate auf einen Wert oberhalb von Nₘₐₓ steigen wird, also ein Übergang in einen kritischen Zustand der Datenübertragung erfolgen wird. In Reaktion auf den Erhalt dieser Information veranlasst die Steuereinheit 7 eine Schlüsselerneuerung und es wird der Schlüssel K' beschafft und ab diesem Zeitpunkt genutzt. Da die Schlüsselerneuerung gezielt unmittelbar vor dem Eintritt des kritischen Zustands der Datenübertragung durchgeführt wird bzw. wurde, steht auch gemäß diesem Szenario der maximale Zeitraum der Nutzung des Schlüssels zur Verfügung. In der FIG 5 ist - in Analogie zu FIG 4 - der minimale Zeitraum, der für die Gültigkeit des jeweiligen Schlüssels K, K' prognostiziert und/oder garantiert werden kann, durch einen mit dem Bezugszeichen 8 versehenen Balken angedeutet. Der Schlüssel K' wird bis zum Zeitpunkt t₂ (über den Zeitraum Δt₃) genutzt. Im Anschluss daran findet ein normaler Schlüsselwechsel statt, da der Schlüssel K' erschöpft ist bzw. dessen Erschöpfung unmittelbar bevorsteht, und es wird der Schlüssel K'' beschafft und ab diesem Zeitpunkt verwendet.

Abhängig vom konkreten Schlüsselmanagement kann es zweckmäßig oder auch erforderlich sein, dass ein Status/State gehalten wird, um ggf. auf Timeouts im Schlüsselmanagement reagieren zu können. Dann kann beispielsweise vorgesehen sein, dass einer der Kommunikationspartner 1, 2 ein Wartesignal (so genannten "Wait State") an den anderen Kommunikationspartner 1, 2 schickt um anzuzeigen, dass ein Wechsel derzeit nicht möglich ist und damit die aktuelle Periode des genutzten Schlüssels verlängert wird.

Insbesondere bezüglich des Haltens eines Status/States sei angemerkt, dass ein Schlüssel-Update-Protokoll nicht notwendig atomar sondern muss, sondern in mehrere Subschritte zerfallen kann. Der Status gibt dann an, in welchem Zustand/Schritt sich das Protokoll gerade befindet. Abhängig vom Protokoll kann beispielsweise ein unterbrochener Schlüssel-Update ggf. wieder aufgesetzt werden oder es wird wieder von vorne begonnen.

Weiterhin ist es möglich, dass bei einem Schlüsselupdate nicht nur einer, beispielsweise der nächste, sondern mehrere, beispielsweise sowohl der nächste als auch der übernächste Schlüssel an die Kommunikationspartner 1, 2 verteilt wird. Dadurch kann ggf. ein lokaler Schlüsselwechsel "on-the-fly" durchgeführt werden, ohne weitere Signalisierung mit dem oder auch den anderen Teilnehmern. Die Selektion des aktuellen Schlüssels kann dann über eine ID im jeweiligen Nutzdatenpaket signalisiert werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Beispielsweise ist es, auch wenn im Rahmen des vorstehenden Ausführungsbeispiels die Abläufe für den Fall zweier Kommunikationspartner 1, 2 beschrieben wurden, gleichermaßen möglich, das Schlüsselmanagement auf die erfindungsgemäße Weise durchzuführen, wenn Nutzdaten zwischen mehr als zwei Kommunikationspartnern in geschützter, beispielsweise verschlüsselter Form zu übertragen sind, beispielsweise von einem Kommunikationspartner Nutzdatenpakete in geschützter Form an zwei, drei oder mehr Kommunikationspartner zu senden sind.

Selbstverständlich ist es auch möglich, dass in einem Netzwerk für mehrere Paare von jeweils zwei Kommunikationspartnern und/oder für mehrere Gruppen von jeweils drei oder mehre Kommunikationspartnern, zwischen denen Nutzdaten geschützt zu übertragen sind, die Schlüsselerneuerung auf die erfindungsgemäße Weise durchgeführt wird.

Weiterhin kann alternativ dazu, dass die beiden Kommunikationspartner 1, 2 jeweils sowohl eine Überwachungseinheit 5 als auch eine Eingabeeinheit 6 aufweisen, nur eine der beiden Komponenten vorhanden sein, da es natürlich ausreichen kann, nur eine der beiden unter Bezugnahme auf die Figuren 3 und 5 beschriebenen Strategien anzuwenden.

Weiterhin sei angemerkt, dass die Überwachung des momentanen Zustandes des Datenverkehrs keineswegs (nur) durch einen oder mehrere der Kommunikationspartner 1, 2 erfolgen muss. Vielmehr kann alternativ oder zusätzlich dazu, dass eine Überwachung des Nutzdatenverkehrs durch einen oder mehrere der beteiligten Kommunikationspartner 1, 2 insbesondere mittels einer Überwachungseinheit 5 dieses oder dieser erfolgt, vorgesehen sein, dass der momentane Zustand des Nutzdatenverkehrs an wenigstens einer anderen Stelle in einem Netzwerk bevorzugt mit einer dort vorgesehenen Überwachungseinheit erfolgt. Dann können Informationen über den momentanen Zustand des Nutzdatenverkehrs an der wenigstens einen anderen Stelle im Netzwerk an einen oder mehrere der Kommunikationspartner 1, 2 übergeben werden, bevorzugt an eine Eingabeeinheit 6 eines oder mehrerer Kommunikationspartner 1, 2.

## Patentansprüche

1. Verfahren zur Datenkommunikation in einem insbesondere industriellen Netzwerk, bei dem zwischen wenigstens zwei Kommunikationspartnern (1, 2) Nutzdaten in geschützter, insbesondere verschlüsselter Form zu übertragen sind und/oder übertragen werden, wobei für den Schutz der Nutzdaten Schlüssel (K-K'''') mit begrenzter Gültigkeit zum Einsatz kommen, und wobei zwischen den wenigstens zwei Kommunikationspartnern (1, 2) zusätzlich zu den geschützten Nutzdaten Schlüsselinformationen, die für eine Erneuerung und/oder Verwaltung von Schlüsseln (K-K'''') erforderlich sind, übertragen werden,
**dadurch gekennzeichnet, dass**
überwacht wird, ob sich der Daten- insbesondere Nutzdatenverkehr in einem kritischen oder unkritischen Zustand befindet, und für den Fall, dass ein unkritischer Zustand vorliegt, unabhängig davon, ob Bedarf an wenigstens einem neuen Schlüssel (K-K'''') besteht oder nicht, gezielt eine Übertragung von Schlüsselinformationen zwischen den wenigstens zwei Kommunikationspartnern (1, 2) erfolgt und/oder wenigstens ein neuer Schlüssel (K-K'''') für die wenigstens zwei Kommunikationspartner (1, 2) beschafft und/oder wenigstens ein Schlüsselwechsel durchgeführt wird.

2. Verfahren nach Anspruch 1,
**dadurch gekennzeichnet, dass**
in Zeiten, in denen ein unkritischer Zustand der Datenübertragung vorliegt, unabhängig davon, ob ein Bedarf an wenigstens einem neuen Schlüsseln (K-K'''') besteht oder nicht, kontinuierlich oder sich insbesondere in vorgegebenen zeitlichen Abständen wiederholend eine Übertragung von Schlüsselinformationen zwischen den wenigstens zwei Kommunikationspartnern (1, 2) erfolgt und/oder kontinuierlich oder sich insbesondere in vorgegebenen zeitlichen Abständen wiederholend wenigstens ein neuer Schlüssel(K-K'''') für die wenigstens zwei Kommunikationspartner (1, 2) beschafft wird und/oder kontinuierlich oder sich insbesondere in vorgegebenen zeitlichen Abständen wiederholend wenigstens ein Schlüsselwechsel durchgeführt wird.

3. Verfahren nach einem der vorhergehenden Ansprüche,
**dadurch gekennzeichnet, dass**
in Zeiten, in denen ein kritischer Zustand der Datenübertragung vorliegt, keine Übertragung von Schlüsselinformationen zwischen den wenigstens zwei Kommunikationspartnern (1, 2) erfolgt und/oder kein neuer Schlüssel (K-K'''') für die wenigstens zwei Kommunikationspartner (1, 2) beschafft wird und/oder kein Schlüsselwechsel durchgeführt wird.

4. Verfahren zur Datenkommunikation in einem insbesondere industriellen Netzwerk, bei dem zwischen wenigstens zwei Kommunikationspartnern (1, 2) Nutzdaten in geschützter, insbesondere verschlüsselter Form zu übertragen sind und/oder übertragen werden, wobei für den Schutz der Nutzdaten Schlüssel (K-K'''') mit begrenzter Gültigkeit zum Einsatz kommen, und wobei zwischen den wenigstens zwei Kommunikationspartnern (1, 2) zusätzlich zu den geschützten Nutzdaten Schlüsselinformationen, die für eine Erneuerung und/oder Verwaltung von Schlüsseln (K-K'''') erforderlich sind, übertragen werden, insbesondere nach einem der Ansprüche 1 bis 3,
**dadurch gekennzeichnet, dass**
Informationen über den zukünftigen Zustand des Daten-, insbesondere Nutzdatenverkehrs bereitgestellt werden, und für den Fall, dass gemäß den Informationen ein kritischer Zustand der Datenübertragung bevorsteht, unabhängig davon, ob Bedarf an wenigstens einem neuen Schlüssel (K-K'''') besteht, vor dem Eintreten des kritischen Zustandes gezielt eine Übertragung von Schlüsselinformationen zwischen den wenigstens zwei Kommunikationspartnern (1, 2) erfolgt und/oder wenigstens ein neuer Schlüssel (K-K'''') für die wenigstens zwei Kommunikationspartner (1, 2) beschafft wird und/oder wenigstens ein Schlüsselwechsel durchgeführt wird.

5. Verfahren nach Anspruch 4,
**dadurch gekennzeichnet, dass**
von wenigstens einer und/oder für wenigstens eine bevorzugt industrielle Applikation, insbesondere Automatisierungsapplikation, Nutzdaten zwischen den wenigstens zwei Kommunikationspartnern (1, 2) übertragen werden, und die Applikation die Informationen über den zukünftigen Zustand des Datenverkehrs bereitstellt.

6. Verfahren nach Anspruch 4 oder 5,
**dadurch gekennzeichnet, dass**
Informationen über den zukünftigen Zustand des Datenverkehrs an der Stelle wenigstens eines der wenigstens zwei Kommunikationspartner (1, 2) bereitgestellt werden, insbesondere Informationen über den zukünftigen Zustand des Daten-, insbesondere Nutzdatenverkehrs durch den wenigstens einen der wenigstens zwei Kommunikationspartner (1, 2) bereitgestellt werden.

7. Verfahren nach einem der vorhergehenden Ansprüche, **dadurch gekennzeichnet, dass**
überwacht wird, ob sich der Daten- insbesondere Nutzdatenverkehr an wenigstens einer Stelle im Netzwerk in einem kritischen oder unkritischen Zustand befindet.

8. Verfahren nach einem der vorhergehenden Ansprüche,
**dadurch gekennzeichnet, dass**
die Überwachung, ob ein kritischer oder unkritischer Zustand der Datenübertragung vorliegt, an wenigstens einem der wenigstens zwei Kommunikationspartner (1, 2) erfolgt, wobei insbesondere derjenige Datenverkehr überwacht wird, der von dem wenigstens einen und/oder durch den wenigstens einen Kommunikationspartner (1, 2) weitergeleitet wird.

9. Verfahren nach einem der vorhergehenden Ansprüche,
**dadurch gekennzeichnet, dass**
von einem unkritischen Zustand ausgegangen wird, wenn wenigstens ein den Daten-, insbesondere Nutzdatenverkehr repräsentierender oder zu diesem gehöriger Parameter, insbesondere die für die Datenübertragung genutzte Bandbreite und/oder die Datenrate (N) und/oder die Paketgröße und/oder die Anzahl weitergeleiteter Datenpakete pro Zeiteinheit, einen vorgegebenen Wert (Nₘₐₓ) unterschreitet oder diesem entspricht, und von einem kritischen Zustand ausgegangen wird, wenn wenigstens ein den Daten-, insbesondere Nutzdatenverkehr repräsentierender oder zu diesem gehöriger Parameter, insbesondere die für die Datenübertragung genutzte Bandbreite und/oder die Datenrate (N) und/oder die Paketgröße und/oder die Anzahl weitergeleiteter Datenpakete pro Zeiteinheit, einen vorgegebenen Wert (Nₘₐₓ) überschreitet.

10. Verfahren nach einem der vorhergehenden Ansprüche,
**dadurch gekennzeichnet, dass**
es sich bei den wenigstens zwei Kommunikationspartnern (1, 2), zwischen denen Nutzdaten in geschützter Form zu übertragen sind und/oder übertragen werden, um Gateways, insbesondere Sicherheits-Gateways handelt, zwischen denen bevorzugt eine geschützte und/oder zu schützende Netzwerkstrecke, insbesondere eine VPN-Verbindung eingerichtet ist oder wird.

11. Verfahren nach einem der vorhergehenden Ansprüche,
**dadurch gekennzeichnet, dass**
Nutzdaten und Schlüsselinformationen zwischen den wenigstens zwei Kommunikationspartnern (1, 2) auf dem gleichen Wege, insbesondere auf dem oder den gleichen Netzwerkpfaden übertragen werden.

12. Kommunikationsgerät (1, 2), das insbesondere zur Durchführung des Verfahrens nach einem der vorhergehenden Ansprüche ausgebildet und/oder eingerichtet ist,
umfassend eine Überwachungseinheit (5), welche ausgebildet und/oder eingerichtet ist, um zu überwachen, ob sich der Daten-, insbesondere Nutzdatenverkehr durch das Kommunikationsgerät (1,2) in einem kritischen oder unkritischen Zustand befindet, und/oder eine Eingabeeinheit (6), welche ausgebildet und/oder eingerichtet ist, um Informationen über einen momentanen und/oder zukünftigen Zustand des Daten-, insbesondere Nutzdatenverkehr zu empfangen,
und eine mit der Überwachungseinheit (5) und/oder der Eingabeeinheit (6) verbundene Steuereinheit (7), welche eine Übertragung von Schlüsselinformationen insbesondere an wenigstens einen weiteren Kommunikationspartner (1, 2) und/oder das Durchführen eines Schlüsselwechsels und/oder die Beschaffung wenigstens eines neuen Schlüssels (K-K'''') in Abhängigkeit der Überwachung des Zustandes des Datenverkehrs und/oder empfangener Informationen über den momentanen und/oder zukünftigen Zustand des Datenverkehrs veranlasst.

13. Computerprogramm umfassend Programmcode-Mittel zur Durchführung des Verfahrens nach einem der Ansprüche 1 bis 11.

14. Computerlesbares Medium, das Instruktionen umfasst, die, wenn sie auf wenigstens einem Computer ausgeführt werden, den wenigstens einen Computer veranlassen, die Schritte des Verfahrens nach einem der Ansprüche 1 bis 11 durchzuführen.
